# EUROPÄISCHE PATENTSCHRIFT

(11) **EP 2 092 290 B1**
(45) Veröffentlichungstag und Bekanntmachung des Hinweises auf die Patenterteilung: **22.10.2014**
(21) Anmeldenummer: 07821891.4
(22) Anmeldetag: 26.10.2007
(51) Int. Cl.: G01M 3/20

(54) **SCHNÜFFELLECKSUCHGERÄT**
SNIFFER LEAK DETECTOR
APPAREIL DE DÉTECTION DE FUITES DE RENIFLARD

(30) Priorität: 29.11.2006 DE 102006056215
(43) Veröffentlichungstag der Anmeldung: 26.08.2009
(73) Patentinhaber: Inficon GmbH, 50968 Köln (DE)
(72) Erfinder: WETZIG, Daniel, 50999 Köln (DE)
(74) Vertreter: Von Kreisler Selting Werner - Partnerschaft von Patentanwälten und Rechtsanwälten mbB
(86) Internationale Anmeldenummer: PCT/EP2007/061531
(87) Internationale Veröffentlichungsnummer: WO 2008/064964

(56) Entgegenhaltungen:
- EP-B- 0 070 341
- EP-B- 0 534 825
- DE-A1- 2 441 124
- DE-A1- 2 525 311
- DE-A1- 2 926 888
- DE-A1- 4 343 912
- DE-A1- 19 735 250
- DE-A1- 19 846 798
- DE-A1-102005 021 909
- DE-C1- 3 616 319

## Beschreibung

Die Erfindung betrifft ein Schnüffellecksuchgerät mit einem Hauptgerät, das eine ein Hochvakuum erzeugende Vakuumpumpvorrichtung und einen Gasdetektor enthält, und einer handgeführten Schnüffelsonde, die über einen flexiblen Schnüffelschlauch und eine lösbare Schlauchkupplung mit einer Gaseingangsleitung des Hauptgerätes verbunden ist.

Lecksuchgeräte, die im Schnüffelbetrieb arbeiten, fördern das mit der Schnüffelsonde aufgenommene Gas über eine Schnüffelleitung zum Hauptgerät. Im Hauptgerät wird mit Hilfe eines Gasdetektors, z. B. eines Massenspektrometers, die Konzentration des Testgases im eingesogenen Luftstrom gemessen. Zur Analyse wird nur ein geringer Teil in das Hochvakuum eingelassen, wo die Gasanalyse mit dem Massenspektrometer stattfindet. Der Hauptteil des Gasstroms wird von einer Vorvakuumpumpe direkt in die Atmosphäre zurückgepumpt. Die Vorvakuumpumpe erzeugt in der Regel ebenfalls den Vordruck für die Turbomolekularpumpe, die das Hochvakuum für das Massenspektrometer erzeugt. Sowohl zum Erreichen eines ausreichend niedrigen Vordrucks als auch zum definierten Gaseinlass in das Hochvakuumsystem ist eine Drosselung des Gasflusses notwendig. Diese Drosselung erfolgt normalerweise durch den Strömungswiderstand der Schnüffelleitung, durch den ein Druckabfall erzeugt wird. Bei Schnüfiellecksuchgeräten wird mit einem Gasdurchsatz zwischen 20 sccm 33 10⁻¹⁸ Nm³/s und 300 sccm 50 10⁻⁷ Nm³/s, abhängig vom Gerätetyp, gearbeitet. Wird während des Betriebs die Schnüffelleitung vom Hauptgerät abgezogen, beispielsweise, um eine verstopfte Leitung durch eine neue zu ersetzen, so steigt der Druck in der Gaseingangsleitung auf annähernd 1000 mbar an. Dies führt zu einem starken Druckanstieg im Hochvakuumbereich, wodurch der Gasdetektor oder die Vakuumpumpvorrichtung zerstört werden kann. So kann durch einen Druckanstieg das Emissionsfilament eines Massenspektrometers zerstört werden, mit der Folge eines totalen Funktionsausfalls. Eine Turbomolekularpumpe wird aufgrund des Druckanstiegs im Vorvakuumsystem ebenfalls stark belastet, weil sie bei abgezogener Schnüffelleitung jenseits der zugelassenen Spezifikation arbeiten muss.

Ein Schnüffellecksuchgerät, von dem der Oberbegriff des Patentanspruchs 1 ausgeht, ist beschrieben in EP 0 534 825 B1. Das Gerät weist im Anschluss an einen abnehmbaren Schlauch ein Entnahmeorgan auf, das ein Nadelventil oder eine poröse Membran aufweist. Der Schlauch, an dem eine Sonde befestigt ist, ist abnehmbar und das Entfernen des Schlauchs führt zu einem Verschluss des Entnahmeorgans. Eine weitere Leitung verbindet den Schlauch mit einem Verbindungspunkt einer Vorvakuumpumpe.

DE 4343912 A1 beschreibt einen mit einer Schnüffelleitung ausgerüsteten Testgaslecksucher mit einer Vorvakuumpumpe, die für den Betrieb des Testgasdetektors und als Pumpe für die Erzeugung und Aufrechterhaltung des Fördergasstroms in der Schnüffelleitung verwendet wird.

Der Erfindung liegt die Aufgabe zugrunde, ein Schnüffellecksuchgerät zu schaffen, das unempfindlich ist gegen ein Abziehen des Schnüffelschlauchs vom Hauptgerät, indem die gefährdeten Komponenten vor einem zu großen Gasstrom geschützt werden.

Das erfindungsgemäße Schnüffellecksuchgerät ist durch den Patentanspruch 1 definiert.

Durch die Begrenzung der Gasströmung wird im Falle des Lösens der Schlauchkupplung eine Gefährdung des Gasdetektors und der Vakuumpumpvorrichtung verhindert. Der auf diese Weise verblockte Fluss ist derart begrenzt, dass der Druckanstieg im Hochvakuumsystem das Emissionsfilament des Massenspektrometers oder einer anderen auf einen zu hohen Druck reagierende Komponente nicht gefährdet. Auch die Vakuumpumpvorrichtung, die beispielsweise eine Turbomolekularpumpe enthält, wird nicht überlastet. Während des Normalbetriebes des Schnüffellecksuchgerätes wirkt sich der Flussbegrenzer nicht nachteilig aus. Sein Strömungswiderstand ist vorzugsweise kleiner als derjenige des Schnüffelschlauchs, so dass der Gesamtwiderstand im wesentlichen durch den Strömungswiderstand des Schnüffelschlauchs bestimmt wird. Der Druckabfall am Flussbegrenzer ist daher bei Normalbetrieb vernachlässigbar. Der Strömungswiderstand des Flussbegrenzers bei abgezogener Schnüffelleitung sollte mindestens etwa ein Drittel desjenigen des Schnüffelschlauchs einschließlich der Schnüffelsonde sein. Vorzugsweise ist er mindestens gleichgroß.

Der Flussbegrenzer kann aus einer Drossel bestehen oder auch aus einer Lochblende. Eine Blende hat die Wirkung, dass der Fluss bei einem Maximalwert verblockt wird und den Maximalwert nicht wesentlich übersteigen kann.

Der Flussbegrenzer in der Gaseingangsleitung hat die Funktion den Fluss bei gezogener Schnüffelleitung zu verblocken und damit zu begrenzen. Der Fluss verblockt an einer Lochblende mit einem Druckverhältnis von p1/p2 > 2. Dies ist bei abgezogener Schnüffelleitung der Fall.

Wird die Schnüffelleitung angeschlossen, reduziert der Druckabfall über die Leitung den Druck an der Eingangsseite der Blende derart, dass die Verblockung aufgehoben wird und der Leitwert über die Blende vernachlässigt werden kann.

Die Wirkungsweise bei der Verwendung einer Drossel, die ein Kapillar mit größerer Längenerstreckung aufweist, ist ähnlich. Die nachteilige Auswirkung der Drossel besteht in der Verringerung des Verblockungseffekts mit Zunahme der Drossel-Kapillarlänge.

Sowohl eine Drossel als auch eine plattenförmige Lochblende aus einem dünnen Blech können verwendet werden, wobei die Verwendung der Lochblende den Idealfall darstellt.

Ein Vorteil der Erfindung besteht darin, dass die Schnüffelleitung ohne besondere Maßnahmen gewechselt werden kann, auch während des Gerätebetriebes. Das Schnüffellecksuchgerät kann auch ohne angeschlossene Schnüffelleitung hochgefahren werden. Ein Ventil am Gaseinlass wird nicht benötigt. Die Turbomolekularpumpe wird beim Abschalten des Gerätes geschont. Die Komponenten des Massenspektrometers, z. B. das Emissionsfilament, werden geschont.

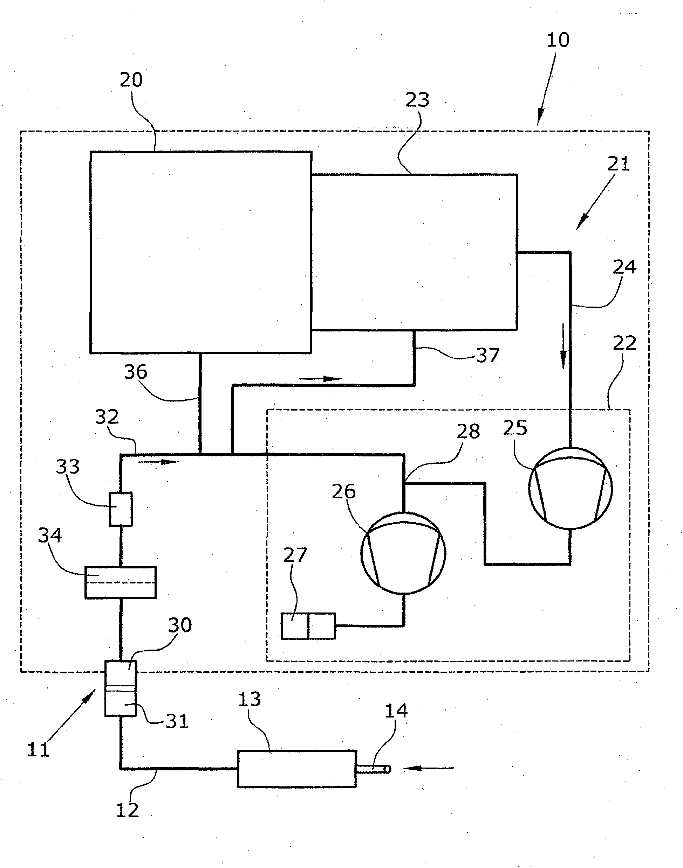

Zweckmäßigerweise ist in Reihe mit dem Flussbegrenzer ein Filter angeordnet. Dadurch wird das Eindringen von Schmutz in das Vakuumsystem verhindert. Im Folgenden wird unter Bezugnahme auf die einzige Figur der Zeichnung ein Ausführungsbeispiel der Erfindung näher erläutert.

In der Zeichnung ist der Aufbau eines Schnüffellecksuchgerätes schematisch dargestellt.

Das Schnüffellecksuchgerät weist ein Hauptgerät 10 auf, das als Standgerät ausgeführt ist und die schwergewichtigen Komponenten enthält. An das Hauptgerät 10 ist über eine Schlauchkupplung 11 ein flexibler Schnüffelschlauch 12 angeschlossen, der eine handgeführte Schnüffelsonde 13 aufweist. Die Schnüffelsonde 13 saugt über einen Einlass 14 aus der Atmosphäre Gas an, das auf Spuren des Testgases, z. B. Helium, untersucht werden soll.

Das Hauptgerät 10 enthält einen Gasdetektor 20, bei dem es sich hier um ein Massenspektrometer handelt. Für die Funktion des Massenspektrometers ist ein Hochvakuum erforderlich, das von der Vakuumpumpvorrichtung 21 erzeugt wird. Das Hochvakuum ist dadurch definiert, dass der Druck p < 1,3 x 10⁻³ mbar ist. Der Hochvakuumbereich besteht aus dem Innenraum des Massenspektrometers 20.

Die Vakuumpumpvorrichtung 21 enthält eine Vorvakuumpumpe 22 und eine Turbomolekularpumpe 23, deren Hochvakuumseite direkt mit dem Gehäuse des Massenspektrometers 20 verbunden ist.

Der Auslass der Turbomolekularpumpe 23 ist über eine Vordruckleitung 24 mit dem Einlass der Vorvakuumpumpe 22 verbunden. Die Vorvakuumpumpe ist hier zweistufig ausgeführt. Sie weist eine erste Pumpstufe 25 und eine Vorpumpstufe 26 auf, die hintereinander geschaltet sind. Die Vorpumpe 26 pumpt in einen in die Atmosphäre führenden Auslass 27.

Die Schlauchkupplung 11 weist eine an dem Gehäuse des Hauptgerätes 10 vorgesehene Steckkupplung 30 auf, in die ein Steckteil 31 der Schnüffelleitung 12 einsteckbar ist. Die Steckerfassung 30 ist an eine Gaseingangsleitung 32 angeschlossen, die den Flussbegrenzer 33 und einen Filter 34 enthält. Der Filter 34 befindet sich zwischen der Schlauchkupplung 11 und dem Flussbegrenzer 33. Der Flussbegrenzer 33 ist hier als Blende ausgeführt.

Die Gaseingangsleitung 32 ist hinter dem Flussbegrenzer 33 mit dem Hochvakuumeinlass 36 des Gasdetektors 20 verbunden. Außerdem ist die Gaseingangsleitung 32 mit einem Zwischengaseinlass 37 der Turbomolekularpumpe 23 verbunden. Schließlich ist die Gaseingangsleitung 32 mit dem Verbindungspunkt 28 der beiden Pumpenstufen der Vorvakuumpumpe 22 verbunden.

Bei einem Anwendungsfall wurde der Flussbegrenzer in das Gerät Ecotec E3000 der INFICON GmbH integriert. Der Standardfluss während des Normalbetriebes mit Schnüffelschlauch 12 beträgt 160 sccm 27 10⁻⁷ Nm³/s. Beim Abziehen des Schnüffelschlauchs steigt der Fluss ohne Schutzmaßnahme auf einige Tausend sccm. Der große Gasfluss lässt den Druck im System stark ansteigen. Daher wurde der Flussbegrenzer 33 eingesetzt. Dieser bestand aus einer Blende mit einem Lochdurchmesser von 0,26 mm. Dadurch wurde der Fluss bei abgezogenem Schnüffelschlauch auf etwa 600 sccm 10 10⁻⁶ Nm³/s gedrosselt. Sowohl im Hochvakuumsystem mit p < 1,3 x 10⁻³ mbar als auch im Vorvakuumsytem (p < 10 mbar) zur Turbomolekularpumpe blieb der Druck bei abgezogenem Schnüffelschlauch im zulässigen Bereich. Während des Normalbetriebes reduziert die Blende den Fluss nur um weniger als 10 %, verglichen mit dem Zustand ohne Blende.

## Patentansprüche

1. Schnüffellecksuchgerät mit einem Hauptgerät (10), das eine ein Hochvakuum erzeugende Vakuumpumpvorrichtung (21) aus einer Vorvakuumpumpe (22) und einer Turbomolekularpumpe (23) und einen Gasdetektor (20) enthält, und einer handgeführten Schnüffelsonde (13), die über einen flexiblen Schnüffelschlauch (12) und eine lösbare Schlauchkupplung (11) mit einer Gaseingangsleitung (32) des Hauptgerätes (10) verbunden ist, wobei die Gaseingangsleitung (32) einen Flussbegrenzer (33) enthält, der bei gelöster Schlauchkupplung (11) die durch die Gaseingangsleitung (32) fließende Gasströmung begrenzt, wobei die Vorvakuumpumpe (22) zwei Pumpenstufen (25, 26) aufweist, deren Verbindungspunkt (28) mit der Gaseingangsleitung (32) verbunden ist,
wobei
die Gaseingangsleitung (32) hinter dem Flussbegrenzer (33) mit einem Hochvakuumeinlass (36) des Gasdetektors (20) verbunden ist.

2. Schnüffellecksuchgerät nach Anspruch 1, **dadurch gekennzeichnet, dass** in Reihe mit dem Flussbegrenzer (33) ein Filter (34) angeordnet ist.

3. Schnüffellecksuchgerät nach Anspruch 1 oder 2, **dadurch gekennzeichnet, dass** die Schlauchkupplung (11) eine Steckkupplung aus einer Steckfassung (30) und einem Steckteil (31) ist.

4. Schnüffellecksuchgerät nach einem der Ansprüche 1 - 3, **dadurch gekennzeichnet, dass** der Flussbegrenzer (33) derart bemessen ist, dass bei abgelöstem Schnüffelschlauch (12) an ihm ein Druckabfall entsteht, der den Druck im Hochvakuumbereich auf einen für den Gasdetektor (20) und die Vakuumpumpvorrichtung (21) ungefährlichen Wert begrenzt.

5. Schnüffellecksuchgerät nach Anspruch 1, **dadurch gekennzeichnet, dass** die Turbomolekularpumpe einen Zwischengaseinlass (37) aufweist, der mit der Gaseingangsleitung (32) verbunden ist.

6. Schnüffellecksuchgerät nach einem der Ansprüche 1 - 5, **dadurch gekennzeichnet, dass** der Flussbegrenzer (33) eine Lochblende ist, deren Strömungswiderstand kleiner ist als 10 % des Strömungswiderstands des Schnüffelschlauchs (12).

7. Schnüffellecksuchgerät nach einem der Ansprüche 1 - 5, **dadurch gekennzeichnet, dass** der Flussbegrenzer eine Drossel ist.

## Claims

1. A sniffing leak detector comprising a main device (10) including a vacuum pump apparatus (21) which is provided to generate a high vacuum and is comprised of a forevacuum pump (22) and a turbomolecular pump (23), and including a gas detector (20), said detector further comprising a hand-operated sniffing probe (13) connected to a gas inlet conduit (32) of the main device (10) via a flexible sniffing hose (12) and a detachable hose coupling (11), the gas inlet conduit (32) including a flow restrictor (33) which in case of detachment of the hose coupling (11) is operative to limit the gas flow passing through the gas inlet conduit (32), the forevacuum pump (22) comprising two pump stages (25,26), their connection point (28) being connected to the gas inlet conduit (32),
wherein
the gas inlet conduit (32) is connected, downstream of the flow restrictor (33), to a high vacuum inlet (36) of the gas detector (20).

2. The sniffing leak detector according to claim 1, **characterized in that** a filter (34) is arranged in series with the flow restrictor (33).

3. The sniffing leak detector according to claim 1 or 2, **characterized in that** the hose coupling (11) is a plug-type coupling comprised of a plug socket (30) and a plug member (31).

4. The sniffing leak detector according to any one of claims 1 - 3, **characterized in that** the flow restrictor (33) is dimensioned in such a manner that, in the detached state of the sniffing hose (12), a pressure drop is generated at the flow restrictor for limiting the pressure in the high vacuum region to a value which is not harmful to the gas detector (20) and the vacuum pump apparatus (21).

5. The sniffing leak detector according to claim 1, **characterized in that** the turbomolecular pump comprises an intermediate gas inlet (37) connected to the gas inlet conduit (32).

6. The sniffing leak detector according to any one of claims 1 - 5, **characterized in that** the flow restrictor (33) is an apertured partition having a flow resistance smaller than 10% of the flow resistance of the sniffing hose (12).

7. The sniffing leak detector according to any one of claims 1 - 5, **characterized in that** the flow restrictor is a throttle.

## Revendications

1. Détecteur de fuite de reniflard comprenant un appareil principal (10) qui renferme un dispositif de pompe à vide (21) produisant un vide poussé, composé d'une pompe à prévide (22) et d'une pompe turbomoléculaire (23), et un détecteur de gaz (20), et une sonde de reniflard (13) manuelle qui est reliée à une conduite d'entrée de gaz (32) de l'appareil principal (10) au moyen d'un tuyau de reniflard souple (12) et d'un raccord de tuyau démontable (11), la conduite d'entrée de gaz (32) contenant un limiteur de débit (33) qui, lorsque le raccord de tuyau (11) est démonté, limite le débit de gaz s'écoulant par la conduite d'entrée de gaz (32), la pompe à prévide (22) présentant deux étages de pompe (25, 26) dont le point de raccordement (28) est relié à la conduite d'entrée de gaz (32), et la conduite d'entrée de gaz (32) étant reliée à une entrée de vide poussé (36) du détecteur de gaz (20) en aval du limiteur de débit (33).

2. Détecteur de fuite de reniflard selon la revendication 1, **caractérisé en ce qu'**un filtre (34) est monté en série avec le limiteur de débit (33).

3. Détecteur de fuite de reniflard selon la revendication 1 ou 2, **caractérisé en ce que** le raccord de tuyau (11) est un raccord à emmanchement composé d'une partie femelle (30) et d'une partie mâle (31).

4. Détecteur de fuite de reniflard selon l'une des revendications 1 à 3, **caractérisé en ce que** le limiteur de débit (33) est dimensionné de telle sorte que, lorsque le tuyau de reniflard (12) est débranché, il se produit sur ce tuyau une chute de pression qui limite la pression dans la région du vide poussé à une valeur sans danger pour le détecteur de gaz (20) et pour le dispositif de pompe à vide (21).

5. Détecteur de fuite de reniflard selon la revendication 1, **caractérisé en ce que** la pompe turbomoléculaire présente une entrée de gaz intermédiaire (37) qui est reliée à la conduite d'entrée de gaz (32).

6. Détecteur de fuite de reniflard selon l'une des revendications 1 à 5, **caractérisé en ce que** le limiteur de débit (33) est un diaphragme percé d'un trou dont la résistance à l'écoulement est inférieure à 10 % de la résistance à l'écoulement du tuyau de reniflard (12).

7. Détecteur de fuite de reniflard selon l'une des revendications 1 à 5, **caractérisé en ce que** le limiteur de débit est un étranglement.
